# EUROPÄISCHE PATENTSCHRIFT

(11) **EP 4 256 284 B1**
(45) Veröffentlichungstag und Bekanntmachung des Hinweises auf die Patenterteilung: **29.05.2024**
(21) Anmeldenummer: 21820160.6
(22) Anmeldetag: 24.11.2021
(51) Int. Cl.: G01G 19/08

(54) **ACHSLASTERFASSUNGSSYSTEM, ACHSSYSTEM UND NUTZFAHRZEUG MIT EINEM ACHSLASTERFASSUNGSSYSTEM**
AXLE LOAD DETERMINING SYSTEM, AXLE SYSTEM AND VEHICLE WITH AN AXLE LOAD DETERMINING SYSTEM
SYSTÈME DE DÉTERMINATION DE CHARGE SUR UN AXE, SYSTÈME D'AXE ET VEHICULE AVEC UN SYSTÈME DE DÉTERMINATION DE CHARGE SUR UN AXE

(30) Priorität: 07.12.2020 DE 102020132445
(43) Veröffentlichungstag der Anmeldung: 11.10.2023
(73) Patentinhaber: SAF-HOLLAND GmbH, 63856 Bessenbach (DE)
(72) Erfinder: ZEIS, Tobias, 63856 Bessenbach (DE)
(74) Vertreter: Müller Schupfner & Partner Patent- und Rechtsanwaltspartnerschaft mbB (Muc)
(86) Internationale Anmeldenummer: PCT/EP2021/082818
(87) Internationale Veröffentlichungsnummer: WO 2022/122387

(56) Entgegenhaltungen:
- WO-A1-99/05484
- WO-A1-2019/056047
- US-A- 5 410 109

## Beschreibung

Die Erfindung betrifft ein Achslasterfassungssystem, ein Achssystem und ein Nutzfahrzeug mit einem Achslasterfassungssystem.

Nutzfahrzeuge sind bereits aus dem Stand der Technik bekannt, diese dienen dazu, eine Nutzlast von einem Ort zu einem anderen zu transportieren. Um dabei die Betriebssicherheit des Fahrzeugs zu gewährleisten und gleichzeitig auch eine Überbeanspruchung des Fahrwegs zu vermeiden, darf dabei die Achslast ein gewisses Maß nicht überschreiten. Um dies zu erreichen, ist insbesondere der Fahrer bzw. der Betreiber verantwortlich, die Einhaltung der maximalen Achslast zu überwachen. Um die vorliegende Achslast zu bestimmen, wird meist eine Waage verwendet, welche dabei unter jeder Achse des Nutzfahrzeugs einzeln positioniert werden muss. Diese Art der Bestimmung der Achslast ist daher sehr zeitraubend und kostenintensiv.

Die US 5,410,109 und die WO 99/05485 betreffen jeweils ein Messsystem einer Nutzfahrzeugachse, wobei ein Gewichtsensor zwischen Fahrzeugrahmen und Luftfeder angeordnet sein kann. Die WO 2019/056047 A1 betrifft ein Gewichtsmanagementsystem zum Abschleppen eines Fahrzeugs. Die KR 101519237 B1 schützt eine Vorrichtung zur Messung der Axiallast eines Lastkraftwagens und ein Betriebsverfahren dafür.

Es ist daher Aufgabe der Erfindung, in einfacher und schneller Weise eine Möglichkeit der Bestimmung der Achslast bereitzustellen.

Diese Aufgabe wird mit einem Achssystem gemäß Anspruch 1 und einem Nutzfahrzeug gemäß Anspruch 14 gelöst. Weitere Merkmale, Vorteile und Ausführungsformen ergeben sich aus den Unteransprüchen, der Beschreibung und den Figuren.

Erfindungsgemäß ist ein Achssystem mit einem Achslasterfassungssystem vorgesehen, insbesondere für ein Nutzfahrzeug. Insbesondere weist das Achslasterfassungssystem ein Kraftübertragungselement und eine Sensoreinheit auf, wobei die Sensoreinheit zumindest einen Sensor aufweisen kann, wobei das Kraftübertragungselement einen ersten Montagebereich und einen zweiten Montagebereich aufweist, wobei der erste Montagebereich mittel- und/oder unmittelbar an einem Fahrzeugrahmen eines Fahrzeugs, insbesondere eines Nutzfahrzeugs, festgelegt ist oder festlegbar ist, wobei am zweiten Montagebereich mittel- und/oder unmittelbar eine Luftfeder und/oder ein Lenker, insbesondere ein Längslenker, angeordnet und/oder anordenbar ist, wobei die Sensoreinheit dazu ausgelegt ist, eine über das Kraftübertragungselement übertragene Kraft zwischen dem ersten Montagebereich und dem zweiten Montagebereich, insbesondere in eine Abstützrichtung, zu bestimmen und/oder zu erfassen. Das erfindungsgemäße Achslasterfassungssystem dient daher dazu, die auf eine Achse wirkenden Kräfte zu erfassen. Vorteilhafterweise ist das Achslasterfassungssystem dabei ein Nutzfahrzeugachslasterfassungssystem. Ein Nutzfahrzeug im Sinne der Erfindung ist insbesondere ein straßentaugliches Fahrzeug und/oder ein Fahrzeug zur Transportierung von Lasten, wobei das Nutzfahrzeug insbesondere eine zulässige Gesamtlast von mehr als 3,5 t, bevorzugt von mehr als 7,5 t und besonders bevorzugt von mehr als 15 Tonnen aufweist. Besonders vorteilhaft ist es, wenn es sich bei dem Nutzfahrzeug um einen Anhänger, insbesondere einen Sattelauflieger, handelt. In anderen Worten kann das Achslasterfassungssystem daher auch ein Nutzfahrzeuganhängerachslasterfassungssystem sein. Das Achslasterfassungssystem verfügt insbesondere über ein Kraftübertragungselement. Dieses Kraftübertragungselement weist insbesondere einen ersten Montagebereich und einen zweiten Montagebereich auf. Mittels des ersten Montagebereichs stützt sich das Kraftübertragungselement mittel- und/oder unmittelbar an einem Fahrzeugrahmen eines Fahrzeugs, insbesondere eines Nutzfahrzeugs, ab. Der erste Montagebereich kann dazu ausgelegt sein, an einem Fahrzeugrahmen eines Fahrzeugs festgelegt zu sein oder festlegbar zu sein. Diese Festlegung kann vorteilhafterweise form- und/oder kraftschlüssig erfolgen, insbesondere unter der Verwendung von reversiblen Befestigungsmitteln, wie z.B. Schrauben oder Bolzen. Alternativ oder zusätzlich bevorzugt kann die Festlegung, insbesondere des ersten Montagebereichs, dabei irreversible erfolgen, insbesondere stoffschlüssig. Eine derartige stoffschlüssige Festlegung kann z.B. durch Schweißen erreicht werden. Der zweite Montagebereich des Kraftübertragungselements dient dazu, Kräfte von einem Achsabstützelement aufzunehmen. Daher ist der zweite Montagebereich des Kraftübertragungselements, insbesondere mittel- und/oder unmittelbar mit einer Luftfeder und/oder einem Lenker, insbesondere einem Längslenker, einer Achsabstützung verbunden. Das Kraftübertragungselement kann daher dazu dienen, Kräfte von einem Lenker oder einer Luftfeder über den zweiten Montagebereich aufzunehmen und über den ersten Montagebereich sicher in einen Fahrzeugrahmen eines Fahrzeugs abzuleiten. Das Kraftübertragungselement kann daher insbesondere ein separates Zusatzelement sein, oder beispielsweise auch ein Haltebock sein, an welchem ein Längslenker eines Nutzfahrzeugs, insbesondere eines Anhängers, anordenbar oder angeordnet ist. Neben dem Kraftübertragungselement verfügt das erfindungsgemäße Achslasterfassungssystem auch über eine Sensoreinheit, wobei diese Sensoreinheit zumindest einen Sensor aufweist. Die Sensoreinheit ist dabei derart ausgelegt, dass diese eine zwischen dem ersten Montagebereich und dem zweiten Montagebereich übertragene Kraft, insbesondere in Abstützrichtung, bestimmen kann und/oder erfassen kann. Diese Einheit kann dazu dienen, die über das Kraftübertragungselement übertragene Kraft zu bestimmen. Die Abstützrichtung ist vorteilhafterweise, insbesondere in einem eingebauten Zustand, des Achslasterfassungssystems zumindest im Wesentlichen parallel zur Richtung des Vektors der Erdbeschleunigung gerichtet und/oder zumindest im Wesentlichen parallel zu einer Ein- und/oder Ausfederrichtung der Luftfeder und/oder der abzustützenden Achse. Unter einem "im Wesentlichen parallel" ist insbesondere zu verstehen, dass der kleinste Winkel zwischen den beiden maßgeblichen Richtungen maximal 15°, bevorzugt maximal 10°, besonders bevorzugt maximal 5° und besonders stark bevorzugt maximal 1°, betragen darf. Alternativ oder zusätzlich bevorzugt kann die Abstützrichtung insbesondere auch diejenige Richtung sein, in welche die Luftfeder eines Nutzfahrzeugs ihre Ein- oder Ausfederbewegung vollführt. Der Sensor oder die Sensoren der Sensoreinheit sind dabei insbesondere in oder an dem Kraftübertragungselement angeordnet, um eine besonders kompakte und sichere Anordnung der Sensoren zu erreichen. Durch das erfindungsgemäße Achslasterfassungssystem ist es möglich, ohne den Einsatz von Waagen oder anderen separaten Bauelementen in einfacher und sicherer Weise die auf ein Achssystem wirkenden Achslasten zu bestimmen bzw. zu ermitteln.

Vorteilhafterweise weist die Sensoreinheit eine Vielzahl von Sensoren auf. Durch das Vorsehen mehrerer Sensoren kann eine gewisse Redundanz in das System eingeführt werden, so dass die Sicherheit des Achslasterfassungssystems gesteigert werden kann. Vorteilhafterweise sind dabei jedoch sämtliche Sensoren der Sensoreinheit derart ausgelegt, dass diese zumindest einen Teil der zwischen dem ersten Montagebereich und dem zweiten Montagebereich übertragenen Kraft, insbesondere in Abstützrichtung, bestimmen bzw. bestimmen zu können. In anderen Worten kann dies bedeuten, dass jeglicher Sensor der Sensoreinheit insbesondere eine Kraft und/oder eine, insbesondere mechanische, Spannung bestimmen kann. Beispielsweise kann daher ein derartiger Sensor ein piezokeramischer Sensor, ein Dehnungsmessstreifen, ein Stromstärken- und/oder ein Spannungssensor sein. Vorteilhafterweise sind dabei alle Sensoren der Sensoreinheit des Achslasterfassungssystems an oder in einem Kraftübertragungselement angeordnet. In anderen Worten kann daher das Achslasterfassungssystem nicht nur ein Kraftübertragungselement aufweisen, sondern eine Vielzahl von Kraftübertragungselementen, wobei an oder in jedem diese Elemente ein Sensor oder eine Vielzahl von Sensoren angeordnet sein kann. Hierdurch kann eine besonders zuverlässige Messung der vorhandenen Achslasten erfolgen.

Vorteilhafterweise ist an und/oder in dem Kraftübertragungselement zumindest ein Sensor festgelegt. In anderen Worten kann dies bedeuten, dass an jedem Kraftübertragungselement zumindest ein Sensor derart angeordnet ist, dass dieser in Relation zum Kraftübertragungselement unverschieblich ist. Durch diese Festlegung zumindest eines Sensors an jedem Kraftübertragungselement kann in besonders sicherer Weise eine Bestimmung der durch das Kraftübertragungselement übertragenen Kräfte zwischen dem ersten Montagebereich und dem zweiten Montagebereich stattfinden.

Vorteilhafterweise liegen die an dem Kraftübertragungselement angeordneten Sensoren in einer Ebene, oder werden von einer Ebene geschnitten. Diese Ebene weist insbesondere eine Normale auf, welche zumindest im Wesentlichen parallel zur Abstützrichtung ist. Hierdurch kann in besonders exakter Weise eine Bestimmung der Belastung des Kraftübertragungselements, insbesondere in Abstützrichtung, erfolgen. Vorteilhafterweise sind dabei die Sensoren derart an dem jeweiligen Kraftübertragungselement oder an allen Kraftübertragungselementen angeordnet, dass alle Sensoren in einer Ebene liegen oder von einer Ebene geschnitten werden, die eine Normale aufweist, welche zumindest im Wesentlichen parallel zur Abstützrichtung ist. Es ist jedoch möglich, dass diese Anordnung der Sensoren ausschließlich für ein Kraftübertragungselement des Achslasterfassungssystems vorliegt und andere Kraftübertragungselemente Sensoren aufweisen bzw. Sensoren an diesen Kraftübertragungselementen angeordnet sind, welche nicht in einer Ebene liegen. Besonders bevorzugt ist es jedoch, wenn alle Kraftübertragungselemente des Achslasterfassungssystems derart ausgebildet bzw. angeordnet sind, dass diese - zumindest jeweils für ein Kraftübertragungselement gesehen - in einer Ebene liegen oder von einer Ebene geschnitten werden, die eine Normale aufweist, welche zumindest im Wesentlichen parallel zur Abstützrichtung ist. Hierdurch kann eine besonders hohe Messgenauigkeit erreicht werden.

Vorteilhafterweise weist das Achslasterfassungssystem eine Vielzahl von Kraftübertragungselementen auf, wobei insbesondere zumindest ein Sensor an jedem Kraftübertragungselement angeordnet ist. Durch die Verwendung von einer Vielzahl, insbesondere zwei oder drei, Kraftübertragungselementen kann eine besonders genaue Erfassung der Achsbelastung bzw. der Achskräfte erfolgen. Vorteilhafterweise ist dabei das Achslasterfassungssystem derart ausgebildet, dass zumindest ein Kraftübertragungselement einen zweiten Montagebereich aufweist, welcher mittel- und/oder unmittelbar an einer Luftfeder angeordnet ist, und wobei der zweite Montagebereich eines weiteren Kraftübertragungselements mittel- und/oder unmittelbar an einem Lenker, insbesondere einem Längslenker, angeordnet ist. Vorteilhafterweise sind jedoch alle Kraftübertragungselement dabei derart ausgebildet und/oder angeordnet, dass deren erster Montagebereich an einem Fahrzeugrahmen festgelegt ist oder festlegbar ist, und wobei die Kraftübertragungselemente dazu dienen, eine Achslast in den Fahrzeugrahmen abzuleiten. Durch diese Art der Ausgestaltung des Achslasterfassungssystems können in besonders zuverlässiger Weise die Abstützkräfte der Achse über das Lenkerelement und über die Luftfeder bestimmt werden. Vorteilhafterweise ist das Achslasterfassungssystem dabei derart angeordnet, dass sämtliche Achskräfte durch ein bzw. die Kraftübertragungselement(e) von der Achse auf einen bzw. den Fahrzeugrahmen des Fahrzeugs übertragen werden. In anderen Worten kann dies bedeuten, dass die Anbindung der Achse an den Fahrzeugrahmen ausschließlich über Kraftübertragungselemente erfolgt, wobei vorteilhafterweise die jeweiligen ersten Montagebereiche dieser Kraftübertragungselemente mittel- oder unmittelbar an dem abstützenden Fahrzeugrahmen des Fahrzeugs festgelegt bzw. angeordnet sind. Durch diese Art der Abstützung einer Achse bzw. Ausbildung des Achslasterfassungssystems können in besonders zuverlässiger Weise sämtliche abstützenden Kräfte des Achslasterfassungssystems bestimmt werden. Daher ist insbesondere bei der bzw. für die Umrechnung der erfassten mechanischen Spannungen bzw. Kräfte durch die Sensoren der Sensoreinheit eine besonders einfache Auswertungsroutine implementierbar, so dass Kosten gespart werden können.

In einer vorteilhaften Weise ist zumindest ein Sensor, bevorzugt zumindest zwei und/oder alle Sensoren, der Sensoreinheit ein statischer und/oder passiver Sensor, insbesondere ein Dehnungsmessstreifen. Ein statischer Sensor ist dabei ein Sensor, welcher in der Lage ist, eine statische Belastung kontinuierlich bestimmen bzw. messen zu können. Daher ist insbesondere ein Sensor mit piezokeramischen Messelementen kein statischer Sensor. Ein passiver Sensor hingegen ist dabei ein Sensor, der keine eigene Energie, insbesondere keine eigene Spannung erzeugt bzw. produziert. Daher ist ein piezokeramischer Sensor auch kein passiver Sensor. Vorteilhafterweise kann daher einer der Sensoren, bevorzugt zumindest zwei und/oder alle Sensoren, der Sensoreinheit und/oder der Sensoren an einem der Kraftübertragungselemente ein Dehnungsmessstreifen sein. Alternativ oder zusätzlich bevorzugt kann es sich bei dem Sensor auch um einen resistiven Kraftaufnehmer handeln. Durch die Verwendung von statischen und/oder passiven Sensoren kann in besonders einfacher Weise eine statische Belastung der Achse erfasst werden, so dass in zuverlässiger Weise die auf das Achssystem wirkenden Kräfte bestimmt werden können. Alternativ bevorzugt kann beispielsweise auch ein piezokeramisches Element bzw. ein dynamischer Kraftsensor verwendet werden, wobei hierdurch die Achslast insbesondere durch eine Integrationseinheit sicher bestimmt werden kann.

Vorteilhafterweise ist das Kraftübertragungselement insbesondere aus Metall oder dazu ausgelegt, eine Kraft von zumindest 10 kilo-Newton (10 000 N), bevorzugt von zumindest 50 kilo-Newton (50 000 N) und besonders bevorzugt von 100 kilo-Newton (100 000 N) zwischen dem ersten Montagebereich und dem zweiten Montagebereich zu übertragen. Durch die Ausbildung des Kraftübertragungselements aus Metall, insbesondere aus Stahl, kann eine hohe Kraftübertragungsmöglichkeit zwischen dem ersten und dem zweiten Montagebereich erreicht werden. Durch die Fähigkeit des Kraftübertragungselements eine Kraft von zumindest 10 kN Newton zwischen dem ersten Montagebereich und dem zweiten Montagebereich, insbesondere in Abstützrichtung, übertragen zu können, kann das Achslasterfassungssystem auch in kleinen Nutzfahrzeugen sicher eingesetzt werden. Sollte die übertragbare Kraft zwischen dem ersten Montagebereich und dem zweiten Montagebereich, insbesondere in Abstützrichtung, zumindest 100 kN Newton betragen, so kann sichergestellt werden, dass das Achslasterfassungssystem auch in schweren Nutzfahrzeugen, insbesondere in Sattelaufliegern, sicher eingesetzt werden kann.

Zweckmäßigerweise weist der erste Montagebereich eine erste, insbesondere ebene, Montagefläche auf, wobei die erste Montagefläche insbesondere eine Normale in Abstützrichtung aufweist, und/oder wobei der zweite Montagebereich eine zweite, insbesondere ebene, Montagefläche aufweist, wobei die zweite Montagefläche insbesondere eine Normale in Abstützrichtung aufweist. Die erste Montagefläche des ersten Montagebereichs dient dabei dazu, mittel- und/oder unmittelbar mit einem Fahrzeugrahmen bzw. einer Abstützfläche eines Fahrzeugrahmens mittel- oder unmittelbar zu kontaktieren. Durch das Ausbilden der ersten Montagefläche in einer Ebene kann erreicht werden, dass auch hohe Kräfte sicher übertragen werden können, ohne die zulässige Flächenpressung zu überschreiten. Sollte die erste Montagefläche insbesondere derart ausgebildet sein, dass diese eine Normale in Abstützrichtung und oder eine zumindest im Wesentlichen parallele Normale zur Abstützrichtung aufweist, so kann sichergestellt werden, dass keine quer wirkenden Kräfte durch den Kontakt der ersten Montagefläche mit einer abstützenden Fläche, insbesondere des Fahrzeugrahmens, in das Achslasterfassungssystem eingeleitet werden. Daher kann durch die Ausbildung der ersten Montagefläche in einer Ebene, dessen Normale zumindest im Wesentlichen in Abstützrichtung weist, der auftretende Messfehler in dem Achslasterfassungssystem reduziert werden. Alternativ oder zusätzlich bevorzugt kann auch der zweite Montagebereich eine zweite Montagefläche aufweisen, welche zweckmäßigerweise eben ist, wobei die zweite Montagefläche insbesondere eine zumindest im Wesentlichen parallele Normale zur Abstützrichtung aufweist. Hierdurch können die bereits dargelegten Vorteile im Hinblick auf die erste Montagefläche auch in der zweiten Montagefläche erreicht werden. Alternativ bevorzugt kann der zweite Montagebereich beispielsweise jedoch auch durch einen Ausnehmungsbereich, insbesondere zur Aufnahme eines Schwenkbolzens für einen Lenker, gebildet sein. Zweckmäßigerweise gelten die obigen Ausführungen bezüglich des ersten und/oder des zweiten Montagebereichs dabei für ein Kraftübertragungselement und/oder für die Hälfte oder die überwiegende Anzahl der Kraftübertragungselemente und/oder für sämtliche Kraftübertragungselemente des Achslasterfassungssystems.

Zweckmäßigerweise ist zumindest ein Kraftübertragungselement ein Haltebock und/oder wobei zumindest ein Kraftübertragungselement ein Zwischenelement, insbesondere ein plattenförmiges Zwischenelement, zur Montage zwischen einer Luftfeder und einem Fahrzeugrahmen ist. Durch die Ausbildung eines Haltebocks als Kraftübertragungselement kann in besonders einfacher Weise die über ein Lenkerelement übertragenen Achskräfte durch das Achslasterfassungssystem bestimmt und/oder erfasst werden. Ein Haltebock im Sinne der Erfindung ist daher insbesondere dasjenige Element, welches die Kräfte zwischen einem Lenker, insbesondere einem Längslenker, und einem Fahrzeugrahmen überträgt und/oder welches den Lenker abstützt und/oder lagert. Ein Zwischenelement im Sinne der Erfindung ist insbesondere ein Kraftübertragungselement, welches im Kraftfluss zwischen der Luftfeder und dem Fahrzeugrahmen angeordnet ist. Das Zwischenelement dient daher insbesondere dazu, vorteilhafterweise ausschließlich, die Kräfte zwischen der Luftfeder und einem Fahrzeugrahmen zu übertragen. Eine Luftfeder kann dabei vorteilhafterweise einen Kolben, insbesondere einen Tauchkolben, und/oder ein Abschlusselement, insbesondere einen Deckel, und/oder einen Luftfederbalg aufweisen. Der Tauchkolben dient dabei insbesondere dazu, in ein Arbeitsvolumen der Luftfeder während einer Einfederbewegung eintauchen zu können. Der Tauchkolben kann dabei beispielsweise an einem Fahrzeugrahmen oder an einem Lenker mittelbar, insbesondere über ein Zwischenelement, und/oder unmittelbar festgelegt sein. Das Abschlusselement hingegen dient dazu, die Luftfeder gegenüber einem Fahrzeugrahmen bzw. einem Lenker abzustützen und begrenzt vorteilhafterweise das Arbeitsvolumen der Luftfeder gegenüberliegend zum Tauchkolben. Zwischen dem Tauchkolben und dem Abschlusselement ist dabei vorteilhafterweise ein Luftfederbalg, insbesondere aus einem elastischen Material wie Gummi, angeordnet, wobei durch eine Verlagerung des Abschlusselements in Relation zum Tauchkolben, insbesondere in Abstützrichtung, das vom Tauchkolben, dem Abschlusselement und dem Luftfederbalg umschlossene Arbeitsvolumen komprimiert und/oder reduziert werden kann. Das Zwischenelement, welches als Kraftübertragungselement ausgebildet ist, kann insbesondere zwischen Kolben und dem Lenker angeordnet sein und/oder zwischen dem Kolben bzw. dem Abschlusselement der Luftfeder und dem Fahrzeugrahmen. In anderen Worten kann das Zwischenelement dazu dienen, die vom Lenker in die Luftfeder eingeleiteten bzw. übertragenen Kräfte oder die zwischen der Luftfeder und dem Fahrzeugrahmen übertragenen bzw. eingeleiteten Kräfte zu übertragen. Alternativ oder zusätzlich bevorzugt kann auch das Abschlusselement und/oder der Tauchkolben als ein Kraftübertragungselement ausgebildet sein. In anderen Worten kann daher in einer möglichen Ausführungsform der Tauchkolben oder das Abschlusselement mit Sensoren zur Bestimmung der übertragenen Kräfte, insbesondere in Abstützrichtung, versehen sein. Dies kann insbesondere durch das Anbringen von Dehnungsmessstreifen am Tauchkolben erfolgen. Vorteilhafterweise sind die Sensoren am Zwischenelement und/oder am Tauchkolben derart angeordnet, sodass diese innerhalb einer Projektion des Luftfederbalgs liegen. Unter einem Liegen innerhalb der Projektion des Luftfederbalgs ist dabei zu verstehen, dass die Projektion der Sensoren auf eine Ebene senkrecht zur Abstützrichtung innerhalb der äußeren Kontur der Projektion des Luftfederbalgs in diese Ebene - senkrecht zur Abstützrichtung - liegen. In anderen Worten kann dies bedeuten, dass bei einer Betrachtung in Abstützrichtung die Sensoren bzw. die Projektionen der Sensoren vom Luftfederbalg bzw. deren Projektionen umgeben wären bzw. sind. Hierdurch kann eine besonders kompakte Anordnung der Sensoren erreicht werden.

In einer bevorzugten Ausführungsform weist der Haltebock zwei Seitenwände und eine Stirnwand auf, wobei die Seitenwände durch die Stirnwand miteinander verbunden sind. Die Seitenwände weisen vorteilhafterweise jeweils Ausnehmungen zur Aufnahme eines Schwenkbolzens auf, wobei an diesem Schwenkbolzen vorteilhafterweise ein Lenkerelement schwenkbar gelagert ist oder lagerbar ist. Die Seitenwände sind dabei insbesondere durch die Stirnwand miteinander verbunden. Vorteilhafterweise weisen die Stirnwand und die Seitenwände jeweils Montageflächen auf, wobei die Montageflächen zweckmäßigerweise in einer Ebene liegen können. Die Montageflächen dienen dabei dazu, insbesondere stoff- oder kraftschlüssig, an einem Fahrzeugrahmen festgelegt zu sein. In anderen Worten können die Montageflächen den ersten Montagebereich ausbilden oder eine Teil des selbigen. Zweckmäßigerweise kann der Haltebock dabei als eine Blechkonstruktion und/oder als ein Gusskörper ausgebildet sein, wobei es zweckdienlich sein kann, um eine mechanisch belastbare Struktur zu erreichen, den Haltebock einstückig auszubilden. Durch das Vorsehen eines Haltebocks mit zwei, insbesondere parallel zueinander orientierten, Seitenwänden und einer Stirnwand, welche vorteilhafterweise quer zu den Seitenwänden orientiert ist, kann eine besonders kostengünstige und mechanisch belastbare Ausgestaltung des Haltebocks erreicht werden.

In einer zweckmäßigen Ausführungsform bilden die Seitenwände und/oder die Stirnwand des Haltebocks einen Teil des ersten Montagebereichs aus, wobei insbesondere die erste Montagefläche des ersten Montagebereichs ein distales Ende, insbesondere in Richtung der Abstützrichtung, der Seitenwände und/oder der Stirnwand ausbildet. In anderen Worten können die Seitenwände und/oder die Stirnwand des Haltebocks dazu ausgelegt sein, mittel- oder unmittelbar an einem Fahrzeugrahmen festgelegt zu sein. Hierdurch kann eine besonders sichere mechanische Übertragung von abstützenden Kräften zwischen dem Haltebock und dem Fahrzeugrahmen erreicht werden.

Vorteilhafterweise umfasst das Achslasterfassungssystem eine Auswerteinheit, wobei die Auswerteinheit dazu ausgelegt ist, die Messdaten von zumindest einem Sensor, bevorzugt aller Sensoren, der Sensoreinheit und/oder des Achslasterfassungssystems zu empfangen, wobei die Auswerteinheit dazu ausgelegt ist, die von dem Sensor erfassten Messwerte in eine Achslast umzurechnen, insbesondere unter Verwendung einer Kalibrierungstabelle und/oder eines neuronalen Netzwerkes. Die Auswerteinheit kann dabei eine separate Einheit sein oder Teil eines Steuergeräts des Nutzfahrzeugs, an welchem das Achslasterfassungssystem montiert ist. Alternativ oder zusätzlich bevorzugt kann die Auswerteinheit dazu ausgelegt sein, die bestimmten und/oder erfassten Lasten bzw. Daten, insbesondere die Achslasten, an ein weiteres System und/oder Steuergerät, insbesondere eines bzw. des Fahrzeugs, weiterzuleiten. Diese Übertragung kann dabei beispielsweise kabelgebunden oder kabellos erfolgen. Alternativ oder zusätzlich bevorzugt kann die Auswerteinheit auch an einem CAN-Bus angeschlossen sein oder anschließbar sein. Die Auswerteinheit dient daher insbesondere dazu, die erfassten Messwerte in eine Kraft-, insbesondere in Richtung der Abstützrichtung, umzurechnen. Dies kann beispielsweise durch eine in der Auswerteinheit hinterlegte Kalibrierungstabelle und/oder durch den Einsatz von Erfahrungswerten und einem neuronalen Netz erfolgen. Durch die Verwendung einer Kalibrierungstabelle und/oder eines neuronalen Netzes kann dabei auch ein statisch unterbestimmtes oder überbestimmtes System verwendet werden, wobei dennoch sicher die auftretenden Achslasten bestimmt werden können, insbesondere bei einem statisch überbestimmten System.

Bevorzugt ist das Achslasterfassungssystem derart ausgebildet, dass die Messwerte zwischen dem und/oder den Sensoren der Sensoreinheit und der Auswerteinheit kabellos übertragen werden und/oder übertragbar sind. In anderen Worten kann die Messwertübertragung zwischen den Sensoren der Sensoreinheit oder zwischen der Auswerteinheit und den Sensoren kabellos erfolgen, so dass insbesondere der Montageaufwand des Achslasterfassungssystems reduziert werden kann. Alternativ bevorzugt kann die Messwertübertragung jedoch auch kabelgebunden erfolgen, um insbesondere das Auftreten von Rauschen zu reduzieren.

Die Erfindung betrifft ein Achssystem, insbesondere ein Nutzfahrzeugachssystem. Vorteilhafterweise umfasst das Achssystem einen Lenker, insbesondere einen Längslenker, und eine Luftfeder und zumindest ein Achslasterfassungssystem, insbesondere wie vorgehend und nachfolgend beschrieben, wobei am zweiten Montagebereich des Kraftübertragungselements des Achslasterfassungssystems mittel- und/oder unmittelbar die Luftfeder und/oder der Lenker angeordnet ist. Durch eine derartige Ausgestaltung können die vorhegend und nachfolgend beschriebenen Vorteile in einem Achssystem realisiert werden.

In einer vorteilhaften Ausführungsform des Achssystems umfasst das Achslasterfassungssystem ein erstes Kraftübertragungselement und ein zweites Kraftübertragungselement, wobei am zweiten Montagebereich des ersten Kraftübertragungselements mittel- und/oder unmittelbar die Luftfeder angeordnet ist, und wobei am zweiten Montagebereich des zweiten Kraftübertragungselements mittel- und/oder unmittelbar der Lenker angeordnet ist. In anderen Worten kann dies bedeuten, dass das erste Kraftübertragungselement dazu dient, Kräfte zwischen der Luftfeder und dem Fahrzeugrahmen und das zweite Kraftübertragungselement Kräfte zwischen dem Lenker und dem Fahrzeugrahmen zu übertragen. Dieses Vorsehen von zwei Kraftübertragungselementen, wobei vorteilhafterweise an jedem dieser Kraftübertragungselemente zumindest ein Sensor der Sensoreinheit angeordnet ist, kann in vorteilhafter Weise sowohl die über den Lenker als auch die über die Luftfeder übertragenen Kräfte bestimmt werden. Vorteilhafterweise umfasst das Achssystem nicht nur ein erstes und ein zweites Kraftübertragungselement, sondern auch ein drittes und viertes Kraftübertragungselement, wobei das erste und das zweite Kraftübertragungselement insbesondere für die - beispielsweise - linke Luftfeder und den linken Lenker einer Achse zuständig sind und das dritte und vierte Kraftübertragungselement jeweils - beispielsweise - für den rechten Lenker und die rechte Luftfeder der Achse. Durch das Vorsehen von beispielsweise vier Kraftübertragungselementen können sämtliche abstützenden Kraftübertragungselemente einer Achse durch das Achslasterfassungssystem erfasst werden bzw. durch die Sensoren der Sensoreinheit des Achslasterfassungssystems überwacht werden, so dass in besonders zuverlässiger Weise die Achslast bestimmt werden kann.

In einer bevorzugten Ausführungsform ist das Achssystem derart ausgebildet, dass das Verhältnis der von dem ersten Kraftübertragungselement in Abstützrichtung übertragenen Kraft zu der von dem zweiten Kraftübertragungselement in Abstützrichtung übertragenen Kraft in einem Bereich von 0,3 bis 0,65 liegt. Hierdurch kann eine Überwachung der auftretenden Achslasten erreicht werden, welche besonders mechanisch belastbar ist. Alternativ bevorzugt kann das Verhältnis auch in einem Bereich von 0,4 bis 0,52 liegen, wobei hierdurch auch ein besonders hohes Maß an Genauigkeit der Erfassung der übertragenen Achslasten erreicht werden kann.

Ein weiterer Aspekt der Erfindung kann ein Nutzfahrzeug, insbesondere ein Nutzfahrzeuganhänger, mit einem Achssystem wie vorgehend und nachfolgend beschrieben, und/oder mit einem Achslasterfassungssystem wie vorgehend und nachfolgend beschrieben betreffen. Der Nutzfahrzeuganhänger kann dabei insbesondere ein Sattelauflieger sein. Zweckmäßigerweise weist dabei jede Achse des Nutzfahrzeugs ein Achssystem wie vorgehend oder nachfolgend beschrieben auf.

Weitere Vorteile und Eigenschaften ergeben sich aus der nachfolgenden Beschreibung über bevorzugte Ausführungsformen des erfindungsgemäßen Gegenstands mit Bezug auf die beigefügten Figuren. Es zeigen:
- Fig. 1: ein Achssystem mit einem Achslasterfassungssystem; und
- Fig. 2: ein Kraftübertragungselement in Form eines Zwischenelements.

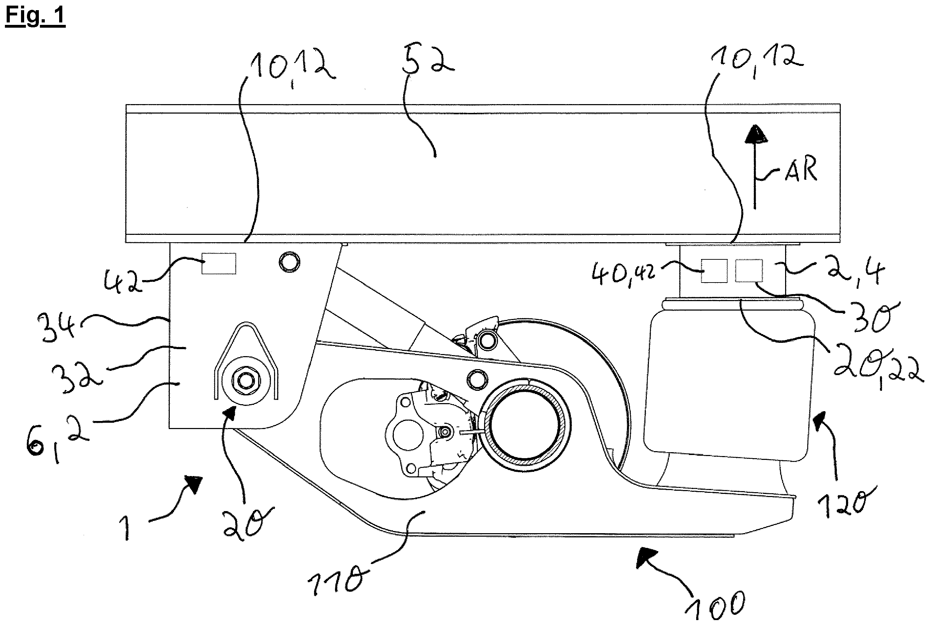

In **Figur 1** ist ein Achssystem 100 gezeigt, welches dazu dient, eine Achse, insbesondere in Abstützrichtung AR abzustützen. Das Achssystem 100 weist ein Achslasterfassungssystem 1 auf. Das Achslasterfassungssystem 1 verfügt über zwei Kraftübertragungselemente 2, wobei eines dieser Kraftübertragungselemente 2 als Haltebock 6 und das andere Kraftübertragungselement 2 als Zwischenelement 4 ausgebildet ist. Die Kraftübertragungselemente 2 verfügen jeweils über einen ersten Montagebereich 10 und über einen zweiten Montagebereich 20. Im ersten Montagebereich 10 ist vorteilhafterweise eine erste Montagefläche 12 und im zweiten Montagebereich 20 eine zweite Montagefläche 22 angeordnet bzw. ausbildet. Das Kraftübertragungselement 2, welches als Zwischenelement 4 ausgebildet ist, weist eine erste Montagefläche 12 im ersten Montagebereich 10 und eine zweite Montagefläche 22 im zweiten Montagebereich 20 auf, wobei die Normale der ebenen ersten Montagefläche 12 und der zweiten Montagefläche 22 parallel zur Abstützrichtung AR ausgebildet sind. Das Zwischenelement 4 weist an einer äußeren Fläche einen ersten Sensor 42 sowie eine Auswerteeinheit 30 auf. Der Sensor 42 der Sensoreinheit 40 dient dabei dazu, die, insbesondere in Abstützrichtung AR, vom Zwischenelement 4 zwischen dem ersten Montagebereich 10 und dem zweiten Montagebereich 20 übertragenen Kräfte zwischen dem Fahrzeugrahmen 52 und der Luftfeder 120 zu bestimmen bzw. zu erfassen. Die Luftfeder 120 stützt den Lenker 110 gegenüber dem Fahrzeugrahmen 52, insbesondere in Abstützrichtung AR, ab. Der Lenker 110 ist in der dargestellten Ausführungsform ein Längslenker, welcher wie dargestellt die abzustützende Achse umschließen kann. Der Lenker 110 stützt sich an dem Kraftübertragungselement 2, welcher als Haltebock 6 ausgebildet ist, über dessen zweiten Montagebereich 20 ab. Der Haltebock 6 verfügt über zwei Seitenwände 32, welche über die Stirnwand 34 miteinander verbunden sind. Daher verfügt jede der Seitenwände 32 jeweils über einen zweiten Montagebereich 20. Der erste Montagebereich 10 des Kraftübertragungselements 2, welches als Haltebock 6 ausgebildet ist, stützt den Haltebock 6 gegenüber dem Fahrzeugrahmen 52 ab. Die Seitenwände 32 sowie die Stirnwand 34 verfügen jeweils zumindest über einen Sensor 42 der Sensoreinheit 40 des Achslasterfassungssystems 1.

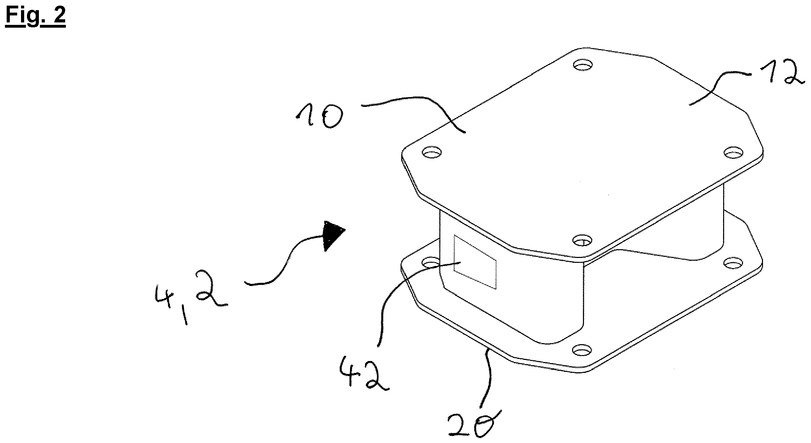

In **Figur 2** ist eine isometrische Ansicht eines Kraftübertragungselements 2 dargestellt, welches als Zwischenelement 4 ausgebildet ist. Das Zwischenelement 4 stützt sich dabei über die erste Montagefläche 12 des ersten Montagebereichs 10 in einem eingebauten Zustand gegenüber einem Fahrzeugrahmen 52 ab. Der zweite Montagebereich 20 hingegen dient dabei dazu, mit einer Luftfeder 120 oder einem Haltebock 6 verbunden zu sein, um Kräfte von dem Haltebock 6 oder der Luftfeder 120 aufzunehmen. An einer äußeren Fläche zwischen dem ersten Montagebereich 10 und dem zweiten Montagebereich 20 ist ein Sensor 42 angeordnet, welcher insbesondere ein Dehnungsmessstreifen sein kann.

### Bezugszeichenliste:

- 1: - Achslasterfassungssystem
- 2: - Kraftübertragungselement
- 4: - Zwischenelement
- 6: - Haltebock
- 10: - erster Montagebereich
- 12: - erste Montagefläche
- 20: - zweiter Montagebereich
- 22: - zweite Montagefläche
- 30: - Auswerteeinheit
- 32: - Seitenwand
- 34: - Stirnwand
- 40: - Sensoreinheit
- 42: - Sensor
- 52: - Fahrzeugrahmen
- 100: - Achssystem
- 110: - Lenker
- 120: - Luftfeder
- AR: - Abstützrichtung

## Patentansprüche

1. Achssystem (100), insbesondere Nutzfahrzeugachssystem, umfassend
einen Lenker (110), insbesondere einen Längslenker, und
eine Luftfeder (120) und
zumindest ein Achslasterfassungssystem (1),
wobei das Achslasterfassungssystem (1), insbesondere für ein Nutzfahrzeug, ein Kraftübertragungselement (2) und eine Sensoreinheit (40) umfasst, wobei das Kraftübertragungselement (2) ein Haltebock (6) ist,
wobei die Sensoreinheit (40) zumindest einen Sensor (42) aufweist,
wobei das Kraftübertragungselement (2) einen ersten Montagebereich (10) und einen zweiten Montagebereich (20) aufweist,
wobei der erste Montagebereich (10) mittel und/oder unmittelbar an einem Fahrzeugrahmen (52) eines Fahrzeugs, insbesondere eines Nutzfahrzeugs, festgelegt ist oder festlegbar ist,
**dadurch gekennzeichnet, dass** die Sensoreinheit (40) dazu ausgelegt ist, eine über das Kraftübertragungselement (2) übertragene Kraft zwischen dem ersten Montagebereich (10) und dem zweiten Montagebereich (20), insbesondere in eine Abstützrichtung (AR), zu bestimmen und/oder zu erfassen, wobei am zweiten Montagebereich (20) des Kraftübertragungselements (2) mittel und/oder unmittelbar der Lenker (110) angeordnet ist.

2. Achssystem (100) gemäß Anspruch 1,
wobei die Sensoreinheit (40) eine Vielzahl von Sensoren (42) aufweist.

3. Achssystem (100) gemäß einem der vorhergehenden Ansprüche,
wobei an und/oder in dem Kraftübertragungselement (2) zumindest ein Sensor (42) festgelegt ist.

4. Achssystem (100) gemäß einem der vorhergehenden Ansprüche,
wobei die an dem Kraftübertragungselement (2) angeordneten Sensoren (42) in einer Ebene liegen oder von einer Ebene geschnitten werden, die eine Normale aufweist, welche zumindest im Wesentlichen parallel zur Abstützrichtung (AR) ist.

5. Achssystem (100) gemäß einem der vorhergehenden Ansprüche,
wobei das Achslasterfassungssystem (1) eine Vielzahl von Kraftübertragungselementen (2) aufweist,
wobei insbesondere zumindest ein Sensor (42) an jedem Kraftübertragungselementen (2) angeordnet ist.

6. Achssystem (100) gemäß einem der vorhergehenden Ansprüche,
wobei zumindest ein Sensor (42), bevorzugt zumindest zwei und/oder alle Sensoren (42), der Sensoreinheit (40) ein statischer bzw. passiver Sensor ist, insbesondere ein Dehnungsmessstreifen.

7. Achssystem (100) gemäß einem der vorhergehenden Ansprüche,
wobei das Kraftübertragungselement (2) insbesondere aus Metall ist und/oder
dazu ausgelegt ist, eine Kraft von zumindest 10 kN, bevorzugt von zumindest 50 kN und besonders bevorzugt von 100 kN zwischen dem ersten Montagebereich (10) und dem zweiten Montagebereich (20) zu übertragen.

8. Achssystem (100) gemäß einem der vorhergehenden Ansprüche, wobei der ersten Montagebereich (10) eine erste, insbesondere ebene, Montagefläche (12) aufweist,
wobei die erste Montagefläche (12) insbesondere eine Normale in Abstützrichtung (AR) aufweist, und/oder
wobei der zweite Montagebereich (20) eine zweite, insbesondere ebene, Montagefläche (22) aufweist,
wobei die zweite Montagefläche (22) insbesondere eine Normale in Abstützrichtung (AR) aufweist.

9. Achssystem (100) gemäß einem der vorhergehenden Ansprüche, wobei zumindest ein Kraftübertragungselement (2) ein Zwischenelement (4), insbesondere ein plattenförmiges Zwischenelement (4), zur Montage zwischen einer Luftfeder (120) und einem Fahrzeugrahmen (52) ist.

10. Achssystem (100) gemäß einem der vorhergehenden Ansprüche,
wobei der Haltebock (6) zwei Seitenwände (32) und eine Stirnwand (34) aufweist,
wobei die Seitenwände (32) durch die Stirnwand (34) miteinander verbunden sind.

11. Achssystem (100) gemäß einem der vorhergehenden Ansprüche,
wobei das Achslasterfassungssystem (1) eine Auswerteeinheit (30) umfasst,
wobei die Auswerteeinheit (30) dazu ausgelegt ist, die Messdaten von zumindest einem Sensor (42) zu empfangen,
wobei die Auswerteeinheit (30) dazu ausgelegt ist, die von dem Sensor (42) erfassten Messwerte in eine Achslast umzurechnen,
insbesondere unter Verwendung einer Kalibrierungstabelle.

12. Achssystem (100) gemäß einem der vorhergehenden Ansprüche,
wobei das Achslasterfassungssystem (1) ein erstes Kraftübertragungselement (2) und ein zweites Kraftübertragungselement (2) umfasst,
wobei am zweiten Montagebereich (20) des ersten Kraftübertragungselements (2) mittel und/oder unmittelbar die Luftfeder (120) angeordnet ist, und
wobei am zweiten Montagebereich (20) des zweiten Kraftübertragungselements (2) mittel und/oder unmittelbar der Lenker (110) angeordnet ist

13. Achssystem (100) gemäß einem der vorhergehenden Ansprüche,
wobei das Achssystem (100) derart ausgebildet ist, das Verhältnis der von dem ersten Kraftübertragungselement (2) in Abstützrichtung (AR) übertragenen Kraft zu der von dem zweiten Kraftübertragungselement (2) in Abstützrichtung (AR) übertragenen Kraft in einem Bereich von 0,3 bis 0,65 liegt.

14. Nutzfahrzeug, insbesondere Nutzfahrzeuganhänger, mit einem Achssystem (100) gemäß einem der vorhergehenden Ansprüche.

## Claims

1. Axle system (100), in particular commercial vehicle axle system,
comprising an arm (110), in particular a trailing arm, and an air spring (120)
and
at least one axle load determining system (1),
wherein the axle load determining system (1), in particular for a commercial vehicle,
comprises a force transmission element (2) and a sensor unit (40),
wherein the force transmission element (2) is a holding block (6),
wherein the sensor unit (40) has at least one sensor (42),
wherein the force transmission element (2) has a first mounting area (10) and a second mounting area (20),
wherein the first mounting area (10) is indirectly and/or directly fixed or can be fixed at a vehicle frame (52) of a vehicle, in particular of a commercial vehicle,
**characterized in that** the sensor unit (40) is designed to determine and/or record a force transmitted via the force transmission element (2) between the first mounting area (10) and the second mounting area (20), in particular in a support direction (AR),
wherein the arm (110) is indirectly and/or directly arranged on the second mounting area (20) of the force transmission element (2).

2. Axle system (100) according to claim 1,
wherein the sensor unit (40) has a variety of sensors (42).

3. Axle system (100) according to one of the preceding claims,
wherein at least one sensor (42) is arranged on and/or in the force transmission element (2).

4. Axle system (100) according to one of the preceding claims,
wherein the sensors (42) arranged on the force transmission element (2) lie in a plane or are intersected by one plane having a normal which is at least substantially parallel to the support direction (AR).

5. Axle system (100) according to one of the preceding claims,
wherein the axle load determining system (1) has a variety of force transmission elements (2),
wherein, in particular, at least one sensor (42) is arranged on each force transmission elements (2).

6. Axle system (100) according to one of the preceding claims,
wherein at least one sensor (42), preferably at least two and/or all sensors (42), of the sensor unit (40) is a static resp. passive sensor,
in particular a strain gauge.

7. Axle system (100) according to one of the preceding claims,
wherein the force transmission element (2) is in particular made of metal
and/or
is designed to transmit a force of at least 10 kN, preferably of at least 50 kN and particularly preferably of 100 kN between the
first mounting area (10) and the second mounting area (20).

8. Axle system (100) according to one of the preceding claims,
wherein the first mounting area (10) has a first, in particular flat, mounting surface (12),
wherein the first mounting surface (12) in particular has a normal in the support direction (AR), and/or
wherein the second mounting area (20) has a second, in particular flat, mounting surface (22),
wherein the second mounting surface (22) in particular has a normal in the support direction (AR).

9. Axle system (100) according to one of the preceding claims,
wherein at least one force transmission element (2) is an intermediate element (4), in particular a plate-shaped intermediate element (4) for mounting between an air spring (120) and a vehicle frame (52).

10. Axle system (100) according to one of the preceding claims,
wherein the support frame (6) has two side walls (32) and an end wall (34), wherein the side walls (32) are connected to each other by the end wall (34).

11. Axle system (100) according to one of the preceding claims,
wherein the axle load determining system (1) comprises an evaluation unit (30),
wherein the evaluation unit (30) is designed to receive the measurement data from at least one sensor (42),
wherein the evaluation unit (30) is designed to convert the measured values recorded by the sensor (42) into an axle load, in particular by using a calibration table.

12. Axle system (100) according to one of the preceding claims,
wherein the axle load determining system (1) comprises a first force transmission element (2) and a second force transmission element (2),
wherein the air spring (120) is arranged indirectly and/or directly on the second mounting area (20) of the first force transmission element (2) and
wherein the arm (110) is arranged indirectly and/or directly
on the second mounting area (20) of the second force transmission element (2).

13. Axle system (100) according to one of the preceding claims,
wherein the axle system (100) is designed in such way that the ratio of the force transmitted by the first force transmission element (2) in support direction (AR) to the force transmitted by the second force transmission element (2) in support direction (AR) lies in a range from 0.3 to 0.65.

14. Commercial vehicle, in particular commercial vehicle trailer, with an axle system (100) according to one of the preceding claims.

## Revendications

1. Système d'essieu (100), en particulier système d'essieu pour véhicule utilitaire, comprenant
un bras oscillant (110), en particulier un bras oscillant longitudinal, et
un ressort pneumatique (120) et
au moins un système de détection de charge d'essieu (1),
dans lequel
le système de détection de charge d'essieu (1), en particulier pour un véhicule utilitaire, comprend un élément de transmission de force (2) et un ensemble capteur (40),
l'élément de transmission de force (2) est un support de retenue (6),
l'ensemble capteur (40) comprend au moins un capteur (42),
l'élément de transmission de force (2) présente une première zone de montage (10) et une deuxième zone de montage (20),
la première zone de montage (10) est fixée ou peut être fixée indirectement et/ou directement sur un châssis (52) d'un véhicule, en particulier d'un véhicule utilitaire,
**caractérisé en ce que**
l'ensemble capteur (40) est conçu pour déterminer et/ou détecter une force transmise par l'intermédiaire de l'élément de transmission de force (2) entre la première zone de montage (10) et la deuxième zone de montage (20), en particulier dans une direction de support (AR), le bras oscillant (110) étant disposé indirectement et/ou directement sur la deuxième zone de montage (20) de l'élément de transmission de force (2).

2. Système d'essieu (100) selon la revendication 1,
dans lequel l'ensemble capteur (40) comprend une pluralité de capteurs (42).

3. Système d'essieu (100) selon l'une des revendications précédentes,
dans lequel au moins un capteur (42) est fixé sur et/ou dans l'élément de transmission de force (2).

4. Système d'essieu (100) selon l'une des revendications précédentes,
dans lequel les capteurs (42) disposés sur l'élément de transmission de force (2) se trouvent dans un plan ou sont coupés par un plan qui présente une normale au moins sensiblement parallèle à la direction de support (AR).

5. Système d'essieu (100) selon l'une des revendications précédentes,
dans lequel le système de détection de charge d'essieu (1) comprend une pluralité d'éléments de transmission de force (2),
en particulier, au moins un capteur (42) est disposé sur chaque élément de transmission de force (2).

6. Système d'essieu (100) selon l'une des revendications précédentes,
dans lequel au moins un capteur (42), de préférence au moins deux et/ou tous les capteurs (42), de l'ensemble capteur (40) est un capteur statique ou passif, en particulier une jauge de contrainte.

7. Système d'essieu (100) selon l'une des revendications précédentes,
dans lequel l'élément de transmission de force (2) est en particulier en métal et/ou est conçu pour transmettre une force d'au moins 10 kN, de préférence d'au moins 50 kN et de manière particulièrement préférée de 100 kN, entre la première zone de montage (10) et la deuxième zone de montage (20).

8. Système d'essieu (100) selon l'une des revendications précédentes,
dans lequel la première zone de montage (10) présente une première surface de montage (12), en particulier plane,
en particulier, la première surface de montage (12) présente une normale à la direction de support (AR), et/ou
la deuxième zone de montage (20) présente une deuxième surface de montage (22), en particulier plane,
en particulier, la deuxième surface de montage (22) présente une normale à la direction de support (AR).

9. Système d'essieu (100) selon l'une des revendications précédentes,
dans lequel au moins un élément de transmission de force (2) est un élément intermédiaire (4), en particulier un élément intermédiaire (4) en forme de plaque, destiné à être monté entre un ressort pneumatique (120) et un châssis de véhicule (52).

10. Système d'essieu (100) selon l'une des revendications précédentes,
dans lequel le support de retenue (6) comprend deux parois latérales (32) et une paroi frontale (34),
les parois latérales (32) sont reliées entre elles par la paroi frontale (34).

11. Système d'essieu (100) selon l'une des revendications précédentes,
dans lequel le système de détection de charge d'essieu (1) comprend une unité d'évaluation (30),
l'unité d'évaluation (30) est conçue pour recevoir les données de mesure d'au moins un capteur (42),
l'unité d'évaluation (30) est conçue pour convertir les valeurs de mesure, détectées par le capteur (42), en une charge d'essieu,
en particulier en utilisant une table d'étalonnage.

12. Système d'essieu (100) selon l'une des revendications précédentes,
dans lequel le système de détection de charge d'essieu (1) comprend un premier élément de transmission de force (2) et un deuxième élément de transmission de force (2),
le ressort pneumatique (120) est disposé indirectement et/ou directement sur la deuxième zone de montage (20) du premier élément de transmission de force (2), et
le bras oscillant (110) est disposé indirectement et/ou directement sur la deuxième zone de montage (20) du deuxième élément de transmission de force (2).

13. Système d'essieu (100) selon l'une des revendications précédentes,
dans lequel le système d'essieu (100) est conçu de telle sorte que le rapport de la force, transmise par le premier élément de transmission de force (2)
dans la direction de support (AR), sur la force, transmise par le deuxième élément de transmission de force (2) dans la direction de support (AR), est dans une plage de 0,3 à 0,65.

14. Véhicule utilitaire, en particulier remorque de véhicule utilitaire, comprenant un système d'essieu (100) selon l'une des revendications précédentes.
